# FASCICULE DE BREVET EUROPEEN

(11) **EP 1 280 722 B1**
(45) Date de publication et mention de la délivrance du brevet: **29.09.2004**
(21) Numéro de dépôt: 01931802.1
(22) Date de dépôt: 04.05.2001
(51) Int. Cl.: B65G 51/01

(54) **MANCHE D'IMMERSION FORCEE D'UN ARTICLE**
TAUCHDÜSE FÜR GEGENSTÄNDE
CHUTE FOR FORCED IMMERSION OF AN ARTICLE

(30) Priorité: 09.05.2000 FR 0005884
(43) Date de publication de la demande: 05.02.2003
(73) Titulaire: Crovara Pescia, Antonio, F-84000 Avignon (FR)
(72) Inventeur: Crovara Pescia, Antonio, F-84000 Avignon (FR)
(74) Mandataire: Blot, Philippe Robert Emile
(86) Numéro de dépôt international: PCT/FR2001/001372
(87) Numéro de publication internationale: WO 2001/085584

(56) Documents cités:
- DE-A- 3 508 565
- US-A- 2 799 540
- US-A- 3 643 400
- US-A- 3 701 565
- US-A- 5 195 852

## Description

La présente invention concerne une manche d'immersion forcée d'un article tel que des fruits ou des légumes dans un bassin empli d'eau comportant un corps délimitant un passage de circulation de l'article et au moins une entrée d'un fluide pour l'établissement d'un courant d'entraînement de l'article.

On connaît des installations de tri et de conditionnement de fruits ou légumes. Une telle installation comporte un convoyeur de transport individuel des fruits, chacun dans un alvéole propre. Ce convoyeur traverse une station d'évaluation du calibre de chacun des fruits et circule ensuite au-dessus d'un ensemble de bassins de stockage temporaire, chaque bassin étant dédié aux fruits d'un même calibre. Chaque fruit est éjecté du convoyeur dans le bassin correspondant à son calibre.

Les fruits d'un même calibre sont temporairement stockés dans un bassin et sont ensuite acheminés par un canal collecteur jusqu'à une unité de remplissage de conteneurs. Ces conteneurs sont formés de caisses parallélépipédiques ouvertes suivant leur face supérieure. Ces conteneurs ont une contenance d'environ 1 m³ et sont couramment désignés par le terme "palox". Les parois de ces conteneurs sont ajourées.

Dans la station de remplissage, les conteneurs sont immergés dans un bassin empli d'eau et les fruits flottant à la surface du bassin sont immergés à l'intérieur du conteneur sous l'action d'un courant d'eau établi dans le bassin.

Plus précisément, le conteneur est, lors de son immersion dans le bassin de la station de remplissage, recouvert d'un couvercle présentant une ouverture de chargement. Cette ouverture est coiffée par une goulotte de guidage des fruits à l'intérieur du conteneur. La goulotte définit généralement un coude dont une extrémité ouverte est disposée en regard de l'ouverture de chargement du couvercle et dont l'autre extrémité définit une entrée des fruits, cette entrée s'étendant dans un plan généralement vertical. L'extrémité supérieure de l'entrée de la goulotte est située au-dessus de la surface de l'eau du bassin dans lequel est immergé le conteneur.

Pour assurer l'immersion des articles, un courant d'eau de débit très élevé est établi entre la partie supérieure du bassin et sa partie inférieure. A cet effet, une pompe d'un débit de l'ordre de 600 m³/h a son entrée reliée au voisinage du fond du bassin. La sortie de la pompe est reliée, par exemple, à l'extrémité amont des bassins de stockage temporaire des fruits prévus en sortie du convoyeur.

Le courant d'eau établi par cette pompe, circule depuis les bassins de stockage temporaire jusqu'au bassin de remplissage du conteneur, en s'écoulant suivant la longueur du canal collecteur. Ce courant provoque un déplacement des fruits vers la goulotte.

L'eau, aspirée depuis le fond du bassin, et circulant au travers du conteneur ajouré, crée au travers de la goulotte un courant d'entraînement des fruits.

Les fruits ainsi entraînés par le courant sont amenés à passer par la goulotte et à traverser le couvercle. Il sont ensuite retenus à l'intérieur du conteneur par le couvercle.

On comprend qu'une telle installation nécessaire pour l'immersion des fruits la mise en oeuvre d'une pompe ayant un débit très élevé.

L'invention a pour but de proposer des moyens d'immersion forcée d'un article permettant d'utiliser une pompe ayant un débit plus réduit.

A cet effet, l'invention a pour objet une manche d'immersion forcée d'un article, caractérisée en ce que ledit passage délimité par le corps est généralement tubulaire et en ce que la manche comporte des moyens d'établissement dans ledit passage d'une veine liquide hélicoïdale circulant à la périphérie dudit passage.

Suivant des modes particuliers de réalisation, la manche comporte l'une ou plusieurs des caractéristiques suivantes :
- lesdits moyens d'établissement de la veine liquide hélicoïdale comportent au moins une buse d'injection formant l'entrée de liquide et débouchant sensiblement tangentiellement à l'intérieur du corps tubulaire, l'axe de la buse d'injection, à son extrémité débouchante, étant décalé angulairement par rapport au plan transversal audit passage pris à l'extrémité débouchante de la buse d'injection ;
- elle comporte au moins deux buses régulièrement réparties suivant une circonférence dudit passage ;
- ledit corps comporte une enveloppe extérieure généralement tubulaire délimitant partiellement ledit passage, la ou chaque buse d'injection débouchant au travers de ladite enveloppe, et lesdits moyens d'établissement de la veine liquide hélicoïdale comportent une jupe tubulaire disposée à l'intérieur de l'enveloppe en regard de la région où débouche la ou chaque buse d'injection, laquelle jupe s'étend sur seulement une partie de la longueur de l'enveloppe et délimite intérieurement un conduit de guidage des articles, ladite jupe délimitant extérieurement, avec ladite enveloppe, un espace annulaire de circulation de la veine liquide hélicoïdale, lequel espace annulaire débouche à une extrémité dans ledit passage ; et
- elle comporte un guide hélicoïdal disposé dans ledit espace annulaire entre l'enveloppe extérieure et la jupe.

L'invention a en outre pour objet un équipement d'immersion forcée d'un article comportant une manche d'immersion telle que décrite ci-dessus et une pompe dont la sortie est reliée à la ou chaque entrée de fluide de la manche, laquelle pompe a un débit compris entre 20 et 100 m³/h.

L'invention sera mieux comprise à la lecture de la description qui va suivre, donnée uniquement à titre d'exemple et faite en se référant aux dessins, sur lesquels :
- la figure 1 est une vue schématique de dessus d'un premier mode de réalisation d'une installation de tri comportant une manche d'immersion forcée d'articles selon l'invention ;
- la figure 2 est une vue en coupe longitudinale de moyens de stockage temporaire des articles implantés dans l'installation de la figure 1 ;
- la figure 3 est une vue en perspective de la manche d'immersion des articles des moyens de stockage temporaire de la figure 2 ;
- les figures 4 et 5 sont des vues analogues à celle de la figure 2, à des stades de fonctionnement successifs des moyens de stockage.
- la figure 6 est une vue en coupe longitudinale d'une variante de réalisation de moyens de stockage temporaire des articles pouvant être implantés dans l'installation de la figure 1 ;
- la figure 7 est une vue schématique de dessus d'un second mode de réalisation d'une installation de tri ;
- les figures 8 et 9 sont respectivement des vues en coupe longitudinale et de dessus des moyens de stockage temporaire des articles mis en oeuvre dans l'installation de la figure 7 ; et
- La figure 10 est une vue en coupe longitudinale d'une variante de réalisation de moyens de stockage temporaire des articles pouvant être implantés dans l'installation de la figure 7.

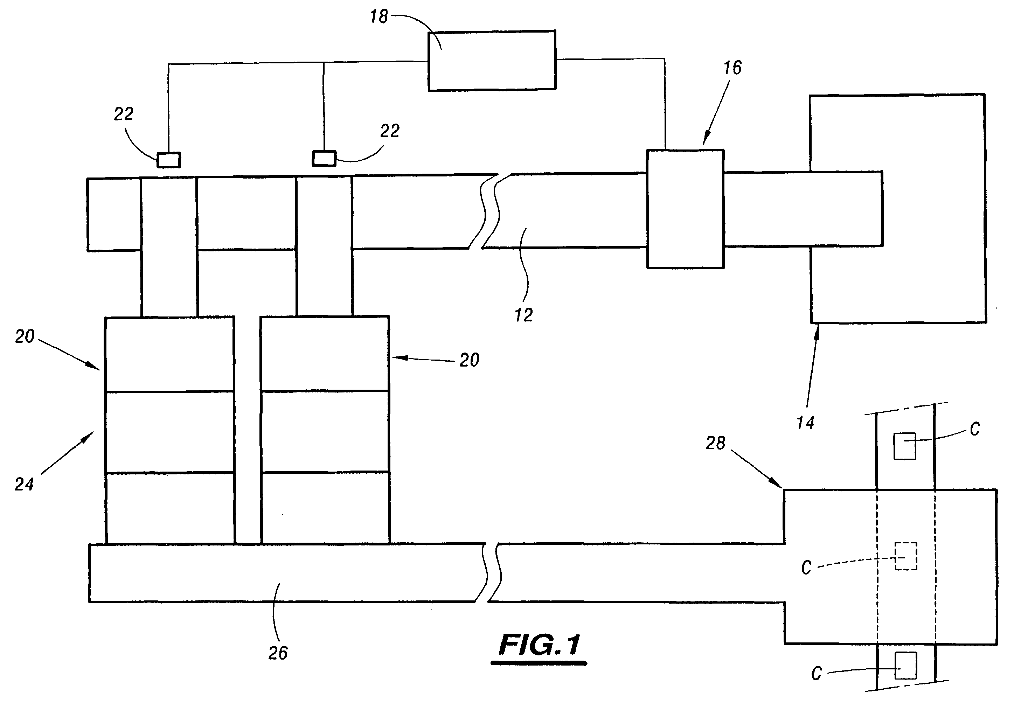

L'installation de tri de fruits représentée sur la figure 1 comporte un convoyeur 12 de transport de fruits permettant un transport individuel des fruits dans des alvéoles. A l'entrée du convoyeur 12 est prévue une station 14 de chargement du convoyeur permettant de recevoir en vrac les fruits à trier et de répartir ceux-ci successivement chacun dans un alvéole.

En aval de la station de chargement 14 est installée une station 16 d'évaluation du calibre de chacun des fruits circulant sur le convoyeur. Cette station comporte par exemple une balance ou une caméra d'observation de chaque fruit. La station 16 est reliée à une unité de traitement d'informations 18.

En aval de la station 16, le convoyeur 12 circule transversalement au-dessus d'un ensemble de bassins de recueil 20 emplis d'eau. Ces bassins constituent des zones de stockage temporaire des fruits en fonction de leur calibre.

Pour chaque bassin, est prévu un moyen 22 d'éjection d'un fruit circulant sur le convoyeur. Chaque moyen d'éjection permet de provoquer la chute d'un fruit dans le bassin 20 associé à son calibre. Les moyens d'éjection 22 sont reliés à l'unité de traitement d'informations 18 pour leur commande individuelle.

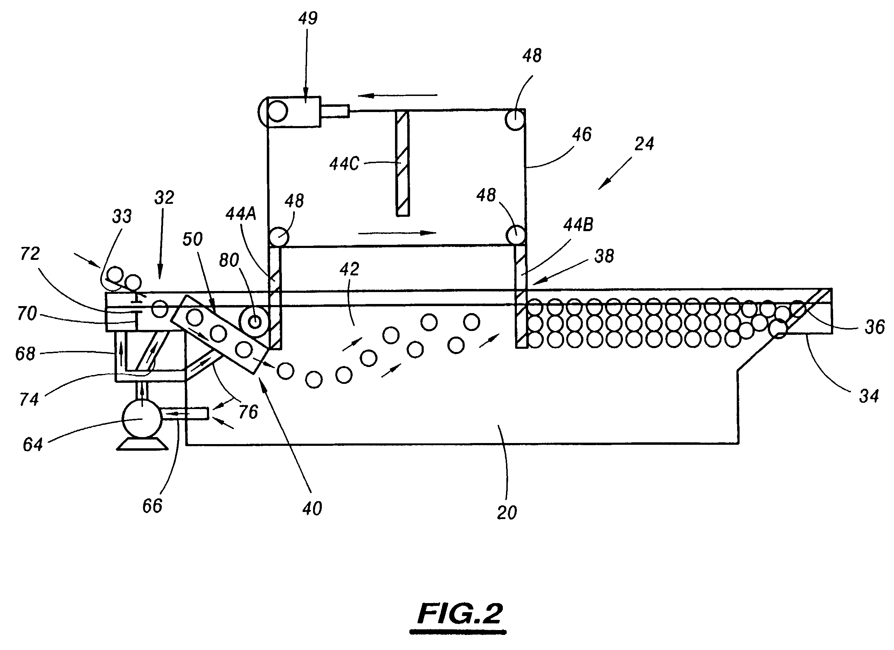

Selon l'invention, chaque bassin de recueil 20 est équipé de moyens 24 de stockage temporaire des fruits suivant plusieurs couches superposées. Ces derniers seront décrits plus en détail en regard des figures 2 à 5.

Les bassins de recueil 20 sont chacun reliés, à une extrémité aval, à un canal collecteur 26 pour l'acheminement des fruits jusqu'à une station 28 de remplissage de conteneurs disposée à une extrémité du canal 26.

Comme connu en soi, la station de remplissage 28 comporte des moyens d'amenée de conteneurs vides, des moyens d'introduction des fruits amenés par le canal 26 à l'intérieur des conteneurs et des moyens d'évacuation des conteneurs remplis.

Chaque bassin 20, dont un est illustré à plus grande échelle sur les figures 2, 4 et 5, a par exemple une profondeur d'un mètre, une longueur de trois mètres et une largeur d'un mètre et demi. Les bassins 20 sont construits côte à côte suivant la longueur du convoyeur 12 avec leur longueur s'étendant perpendiculairement à la direction d'avancement du convoyeur.

Comme illustré sur la figure 2, à une extrémité amont, chaque bassin 20 présente une région de profondeur réduite constituant une zone 32 de réception des fruits provenant du convoyeur 12. Une rampe 33 de guidage des fruits s'étend partiellement au-dessus de la zone 32.

A son extrémité aval opposée, le bassin présente un canal 34 de liaison au canal collecteur 26. Ce canal 34 présente également une profondeur réduite. Une porte 36 d'obturation du canal 34 est prévue pour permettre l'isolement du bassin 20 et du canal 26. Elle est commandée par l'unité de traitement d'informations 18.

Les moyens de stockage temporaire 24 comportent, d'une part, un ensemble de parois verticales immergées formant un contour fermé 38 délimitant un espace de stockage temporaire des fruits sur plusieurs couches superposées et, d'autre part, des moyens 40 d'immersion forcée de chaque fruit issu du convoyeur 12 dans l'espace clos délimité par le contour fermé 38.

Dans le mode de réalisation représenté, le contour fermé 38 est délimité par deux parois latérales parallèles 42 du bassin et par deux panneaux 44A, 44B mobiles s'étendant parallèlement l'un à l'autre et transversalement aux parois latérales 42. Le panneau 44A est initialement disposé dans la région aval du bassin, alors que le panneau 44B s'étend dans sa région médiane. Les panneaux 44A et 44B s'étendent transversalement à la longueur du bassin 20.

Les panneaux 44A et 44B sont portés par une boucle 46 montée mobile autour de quatre pignons de guidage 48 sous la commande de moyens d'entraînement 49. La boucle 46 est disposée au-dessus du bassin 20 et elle circule suivant la longueur du bassin. Les panneaux 44A et 44B sont associés à un troisième panneau 44C porté par la boucle. Les trois panneaux 44A, 44B et 44C sont régulièrement espacés suivant la longueur de la boucle 46. Ils sont séparés d'un intervalle d'environ un mètre. Les panneaux sont articulés sur la boucle 46 et sont maintenus sensiblement verticaux sous l'action de leur propre poids. La boucle 46 présente un brin inférieur s'étendant suivant environ la moitié de la longueur du bassin 20 et un brin supérieur de retour s'étendant au-dessus du brin inférieur.

Les panneaux 44A et 44B ainsi supportés par la boucle 46 sont partiellement immergés dans le bassin 20. Leur extrémité inférieure est espacée du fond du bassin et délimite ainsi un intervalle de passage des fruits.

Les moyens 40 d'immersion forcée des fruits comportent une manche 50 inclinée de guidage des fruits dont une extrémité d'entrée s'étend dans la zone 32 de réception des fruits et dont l'autre extrémité de sortie est dirigée vers le fond du bassin et s'ouvre au-dessous du niveau de l'extrémité inférieure du panneau 44A.

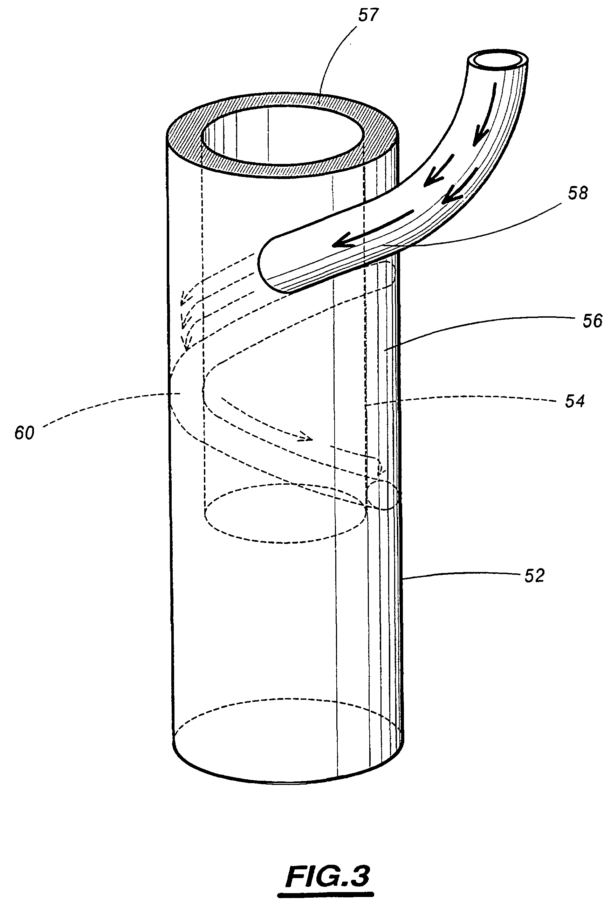

La manche 50 d'immersion des fruits est représentée seule sur la figure 3. Elle comporte un tube extérieur 52 rectiligne formant enveloppe à l'intérieur duquel est disposé, dans sa partie amont, une jupe constituée d'un tube 54 de diamètre inférieur. Le tube 54 s'étend sensiblement suivant la moitié de la longueur du tube extérieur 52. Les longueurs des tubes 52 et 54 sont respectivement de 500 mm et de 250 mm. Leurs diamètres extérieurs sont respectivement de 168 mm et de .139 mm. Les tubes 52 et 54 sont coaxiaux et délimitent entre eux un espace annulaire 56 ayant une largeur d'environ 12 mm.

A l'extrémité d'entrée de la manche, l'espace annulaire 56 est obturé par une rondelle 57 soudée entre les extrémités des tubes 52 et 54.

Au moins une buse 58 d'arrivée d'eau sous pression débouche dans l'espace annulaire 56 en traversant le tube extérieur 52. La ou chaque buse est disposée au voisinage de l'extrémité d'entrée de la manche. Lorsque plusieurs buses sont présentes, celles-ci sont réparties régulièrement suivant une même circonférence du tube extérieur 52.

Dans le mode de réalisation envisagé, la buse 58 débouche sensiblement tangentiellement au tube extérieur 52 et définit avec l'axe de la manche un angle non nul, la sortie de la buse étant orientée vers l'extrémité de sortie de la manche. L'angle défini par la buse 58 avec le plan transversal au tube est compris avantageusement entre 10° et 120° et est de préférence par exemple de 45°. Le diamètre de la buse est d'environ 1 pouce ¼, c'est-à-dire environ 3,175 cm.

Avantageusement, un fil de guidage conformé en hélice est disposé dans l'espace annulaire 56. Il s'appuie contre les tubes 52 et 54 et assure un guidage suivant un trajet hélicoïdal de la veine fluide issue de la buse 58. Le fil 60 s'achève à l'extrémité du tube intérieur 54. Le pas de l'hélice défini par le fil 60 est par exemple de 120 mm. Ainsi, l'inclinaison du fil 60 par rapport à l'axe du tube est identique à celle de l'axe de la buse 58 à son extrémité débouchante.

Les moyens de stockage comportent en outre une pompe 64 dont l'entrée est reliée à un piquage 66 d'aspiration d'eau installé au voisinage du fond du bassin. Trois conduits d'acheminement d'eau sont reliés à la sortie de la pompe 64.

Un premier conduit 68 émerge dans le fond de la zone 32 de réception des fruits en arrière d'une paroi verticale 70 munie d'une rangée horizontale de buses 72 formant un diffuseur d'eau. Ces buses s'étendent sensiblement au niveau de la surface de l'eau dans le bassin 20.

Un second conduit 74 achemine l'eau jusqu'au fond du bassin dans la zone 32 de réception des produits. Il débouche entre la cloison 70 et l'entrée de la manche 50.

Enfin, un troisième conduit 76 est relié à la buse 58 de la manche d'immersion forcée des fruits. La pompe est telle que le débit au travers de la buse 58 est compris entre 20 et 100 m³/h et de préférence de 20 à 40 m³/h.

Une pompe immergée 80 est en outre disposée au-dessus de la manche 50. Elle établit, dans le bassin 20, un courant d'eau en circuit fermé circulant en surface de l'amont vers l'aval, c'est-à-dire de la zone 32 au canal de liaison 34.

L'installation représentée aux figures 1 à 5 fonctionne de la manière suivante.

Les fruits reçus en vrac dans la station 14 sont disposés individuellement dans des alvéoles. Le calibre de chacun est évalué dans l'unité 16. En fonction du calibre qui lui est affecté, chaque fruit est éjecté au-dessus d'une des zones 32 de réception d'un bassin empli d'eau correspondant à son calibre. Le fruit est alors guidé jusqu'à la région de réception 32 par la rampe 33.

Initialement, la boucle 46 des moyens de stockage temporaire est placée dans une position telle que deux panneaux 44A et 44B sont partiellement immergés et délimitent avec les parois latérales 42 du bassin un espace clos de réception des fruits.

Sous l'action de la circulation d'eau établie par la pompe 64, les fruits sont guidés jusqu'à la manche 50.

L'eau sous pression acheminée dans la manche 50 depuis la buse 58 arrive dans l'espace annulaire 56 avec un angle d'incidence non nul par rapport au plan transversal. De plus, son trajet s'incurve au contact de la paroi cylindrique du tube extérieur 52. Ainsi, un courant hélicoïdal est créé à l'intérieur de la manche 50, le long de sa paroi extérieure. Ce courant est dirigé vers l'extrémité de sortie des fruits.

Les fruits sont aspirés dans la manche 50 par effet Venturi sous l'action du courant hélicoïdal établi à la périphérie du tube extérieur. Les fruits sont alors acheminés au travers de la manche jusqu'à son extrémité inférieure où ils sont libérés dans l'eau du bassin à une profondeur inférieure à celle de l'extrémité du panneau 44A.

La sortie des fruits de la manche 50 et leur entrée dans la masse d'eau du bassin 20 sont facilitées par le courant hélicoïdal formé en sortie de la manche, celui-ci créant un effet de tire-bouchon évitant que les fruits ne viennent buter contre la masse d'eau. Le courant hélicoïdal établi dans la manche 50 permet d'immerger un fruit avec un débit du courant d'eau d'entraînement relativement faible, limitant ainsi la capacité de la pompe 64.

Après avoir été expulsés de la manche 50, les fruits remontent vers la surface puisqu'ils ont une densité inférieure à celle de l'eau. Les fruits étant libérés au-dessous du contour fermé 38, ceux-ci se trouvent confinés dans l'espace clos délimité par ce contour.

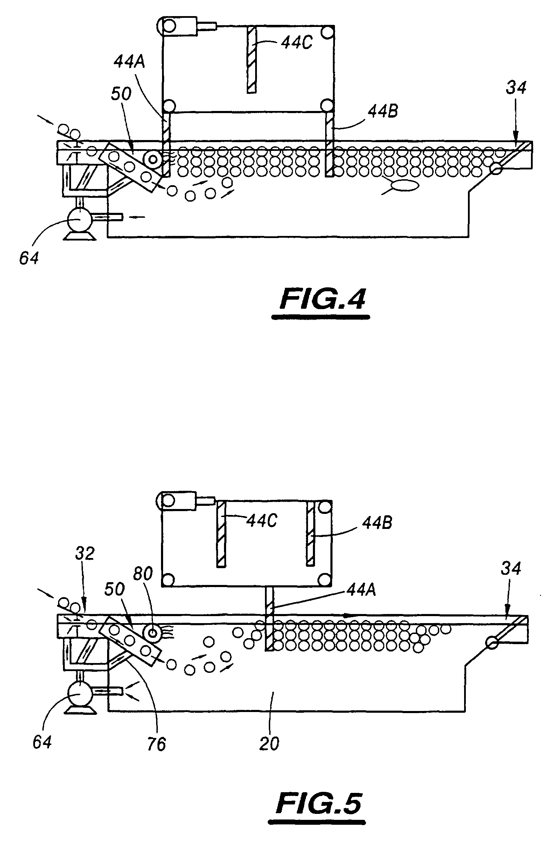

Au fur et à mesure de l'arrivée de nouveaux fruits, et comme illustré sur la figure 4, les fruits s'accumulent à l'intérieur du contour fermé 38 et se répartissent sur plusieurs couches. Les fruits sont simultanément entraînés vers le panneau aval 44B sous l'action du courant établi par la pompe immergée 80 placée en arrière du panneau amont 44A.

Dès qu'un nombre de fruits correspondant au nombre de fruits pouvant être contenus dans un conteneur a été introduit entre les panneaux 44A et 44B, la boucle 46 est mise en mouvement, comme illustré sur la figure 5, de sorte que le panneau aval 44B s'efface, remontant vers le trajet de retour, alors que le panneau amont 44A pousse les fruits vers le canal de sortie 34. Simultanément, le panneau 44A constitue une barrière retenant les fruits que les moyens d'immersion forcée 40 continuent d'acheminer. Le panneau 44A est amené jusqu'à la position précédemment occupée par le panneau 44B, la position initiale du panneau 44B étant occupée par le troisième panneau 44C qui était initialement sur le trajet de retour de la boucle. Les nouveaux panneaux mis en place délimitent ainsi à nouveau un espace clos de réception des produits. Le cycle précédemment décrit est à nouveau mis en oeuvre.

Les fruits libérés par les moyens de stockage temporaire sont ensuite acheminés par le canal 26 jusqu'à la station de remplissage des conteneurs 28.

On conçoit que l'installation décrite ici permet, pour chaque calibre de fruit, de disposer d'une zone de stockage temporaire des fruits calibrés, tout en réduisant considérablement la surface totale occupée par l'installation. En effet, chaque moyen de stockage temporaire occupe une place réduite du fait du stockage des fruits sur plusieurs couches.

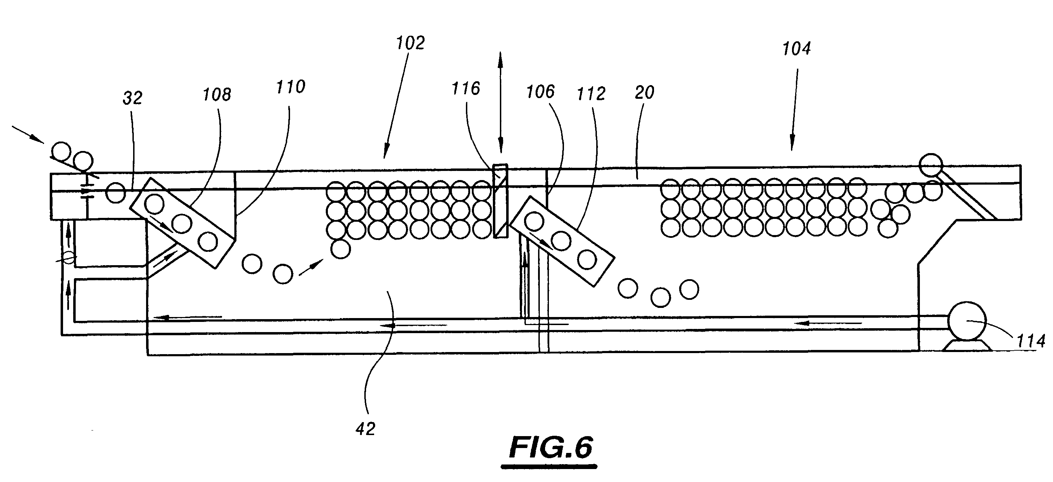

Sur la figure 6 est représentée une variante de réalisation des moyens de stockage temporaire pouvant être mis en oeuvre dans l'installation de la figure 1.

Dans cette variante de réalisation, la cuve 20 est séparée en deux régions d'accumulation temporaire 102, 104 de volumes sensiblement identiques, par une paroi transversale ajourée 106. La première région 102 est située immédiatement en aval de la zone 32 de réception des fruits. Une manche d'immersion forcée 108, dont l'extrémité d'entrée est disposée dans la zone 32 des fruits relie la zone 32 à la région d'accumulation 102. L'extrémité de sortie de la manche est orientée vers le fond de la cuve 20 et s'étend à une profondeur permettant l'accumulation de fruits sur plusieurs couches. Au droit de l'extrémité de sortie de la manche 108 est prévue une cloison verticale 110.

Au travers de la cloison intermédiaire 106 est disposée une seconde manche 112 d'immersion forcée des fruits. Celle-ci a son extrémité d'entrée placée au voisinage de la surface de l'eau contenue dans la région d'accumulation 102. Son extrémité de sortie est placée dans la région 104. Elle est orientée vers le fond de la cuve et est disposée à l'écart du niveau du liquide.

Les deux manches 108 et 112 d'immersion forcée des fruits sont identiques à la manche 50 de la figure 3. Elles sont alimentées depuis une pompe 114 prélevant de l'eau dans le bassin 20 et la réinjectant au travers des manches, ainsi qu'au travers des buses prévues dans la zone 32 de réception des fruits.

Enfin, un panneau amovible 116 est monté en regard de l'extrémité d'entrée de la seconde manche 112. Le panneau 116 est par exemple déplaçable à coulissement suivant une direction verticale entre une position d'obturation de l'entrée de la manche 112 et une position escamotée au-dessus du niveau de l'eau où les fruits sont ainsi libres de s'engager au travers de la manche 112. Le panneau 116 forme ainsi une guillotine.

Dans ce mode de réalisation, le panneau 116 est initialement dans sa position d'obturation de l'entrée de la manche 112.

Les fruits arrivant depuis le convoyeur et tombant dans la zone de réception 32 sont immergés par la manche 112 et sont libérés en profondeur dans la première région d'accumulation 102 au-dessous de l'espace clos délimité par les parois latérales du bassin 20 et les parois 110 et 116.

Au fur et à mesure de leur éjection hors de la manche 108, les fruits s'accumulent sur plusieurs couches entre les parois 110 et 116. Après qu'une quantité de fruits suffisante pour le remplissage d'un conteneur se soit accumulée dans la région 102, le panneau 116 est levé de sorte que les fruits présents dans cette région d'accumulation temporaire sont progressivement aspirés par la seconde manche 112 et transférés dans la région d'accumulation 114 où ils se répartissent également sur plusieurs couches superposées.

Pour leur chargement dans un conteneur, les fruits contenus dans la région d'accumulation 104, sont ensuite transférés par le canal collecteur 26 et acheminés jusqu'à la station de chargement 28.

Avec de tels moyens de stockage temporaire, la surface totale de l'installation est également réduite puisque les fruits sont stockés suivant plusieurs épaisseurs.

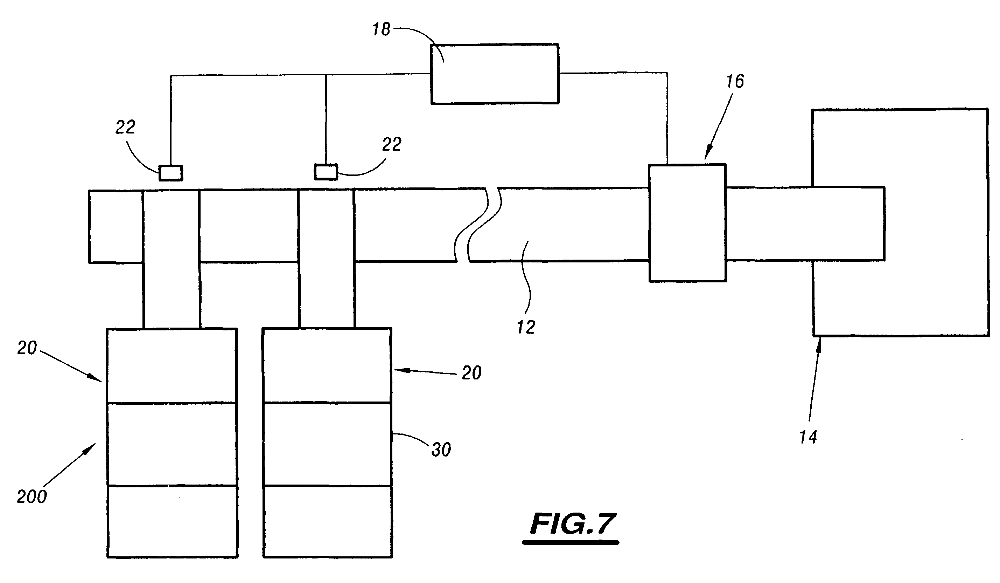

Sur la figure 7, est représentée une variante de réalisation de l'installation selon l'invention.

Dans ce mode de réalisation, les éléments identiques ou analogues à ceux des modes de réalisation des figures précédentes sont désignés par les mêmes numéros de référence.

Comme illustré sur la figure 7, la variante de réalisation de l'installation est dépourvue de canal collecteur 26 de transport des fruits et d'unité commune de chargement des fruits dans les conteneurs.

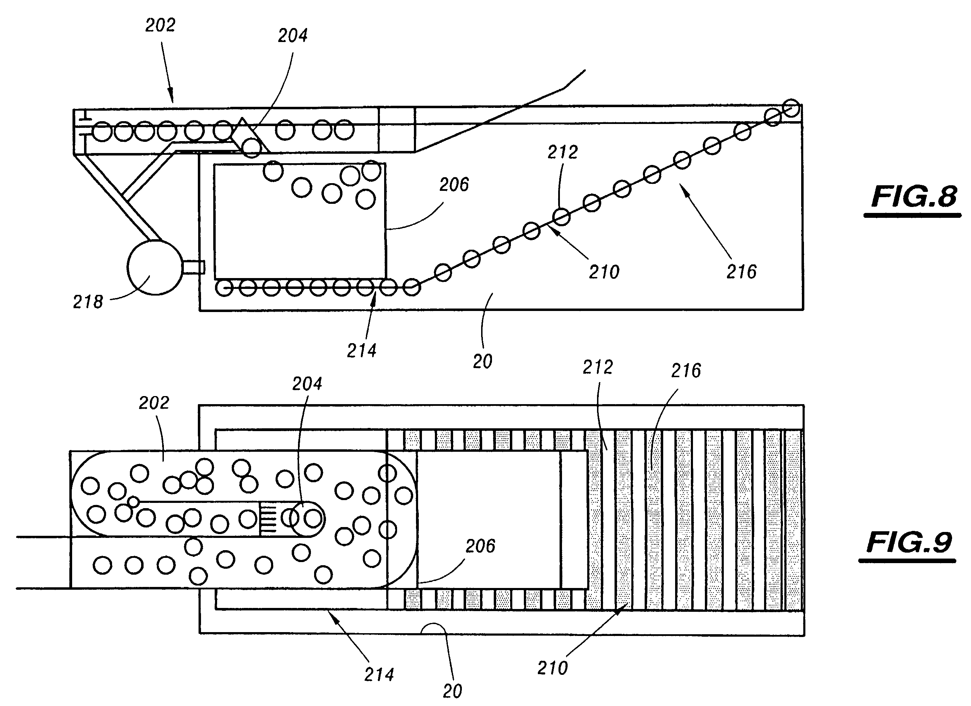

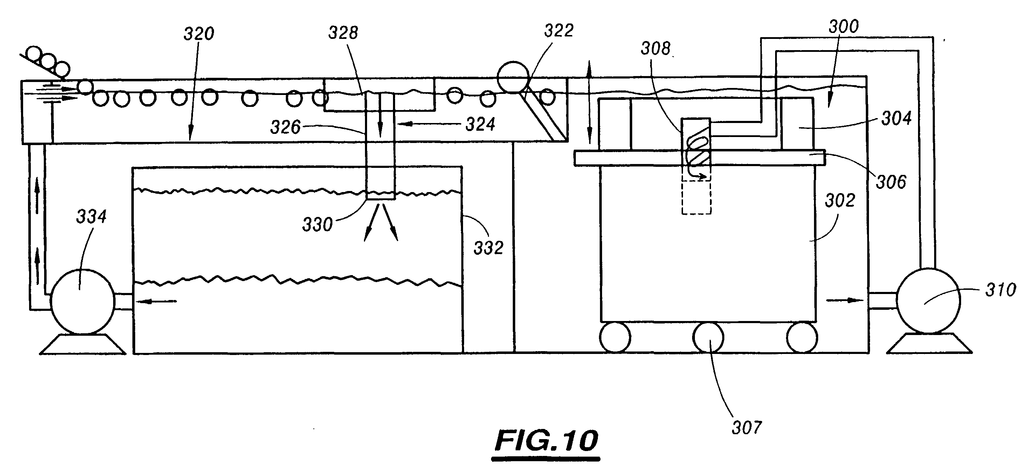

Elle comporte toutefois, pour chaque calibre de fruit, un bassin 20 dans lequel sont prévus des moyens 200 de stockage temporaire des fruits sur plusieurs couches superposées. Comme illustré sur les figures 8 et 9, ces moyens comportent des moyens de chargement direct sur plusieurs couches des fruits à l'intérieur d'un conteneur immergé.

A cet effet, les moyens 200 comportent un canal horizontal en spirale 202 à une extrémité duquel les fruits issus du convoyeur 12 sont reçus et à l'autre extrémité duquel est installée une manche d'immersion forcée 204 identique à la manche 50 de la figure 3.

Un conteneur 206 est immergé au-dessous de la manche 204 dans le bassin 20. Un tel conteneur est ouvert suivant sa face supérieure.

Dans la cuve 20 est disposé un chemin 210 de roulement et de support du conteneur 206. Ce chemin comporte une succession de rouleaux s'étendant parallèlement aux autres. Le chemin 210 présente une région plane 214 de support du conteneur au-dessous de la manche 204 et une région inclinée formant rampe permettant l'immersion d'un conteneur vide et la sortie du bassin d'un conteneur plein. La position du chemin 210 est définie de telle sorte que la face ouverte du conteneur se trouve juste au-dessous du fond du canal 202.

Une pompe 218 ayant une bouche d'aspiration piquée dans le bassin 20 a sa sortie de refoulement connectée d'une part à l'extrémité du canal en spirale 202 où sont reçus les produits et d'autre part à la manche 104 pour son alimentation en eau.

Dans ce mode de réalisation, le contour fermé délimitant l'espace de réception des produits est délimité par les quatre parois latérales du conteneur 206.

On comprend que, dans ce mode de réalisation, comme dans le précédent, les fruits issus du convoyeur 12 et ayant tous un même calibre sont acheminés jusqu'à la manche 204 par le canal 202. Ils sont ensuite immergés et libérés au fond de la caisse 206 par la manche 204. En remontant, les fruits s'accumulent dans la caisse 206 en se répartissant sur plusieurs couches superposées. Le fond du canal 202 forme alors une barrière évitant que les fruits ne s'échappent du conteneur 206.

Lorsque l'un des conteneurs est plein, celui-ci est sorti du bassin et remplacé par un conteneur vide.

Dans ce mode de réalisation également, le stockage temporaire des fruits triés sur plusieurs couches superposées permet de réduire considérablement l'encombrement de chacun des bassins et donc de limiter l'encombrement total de l'installation.

Sur la figure 10 est représentée une variante de réalisation des moyens de stockage temporaire pouvant être implantés à chaque sortie du convoyeur 12 dans l'installation de la figure 7.

Dans ce mode de réalisation, un bassin 300 empli d'eau est adapté pour recevoir un conteneur 302 de transport de fruits triés. Le bassin a, dans sa partie principale, une profondeur suffisante pour l'immersion complète du conteneur 302.

Un équipage mobile 304 est monté déplaçable, par rapport au bassin, entre un position de remplissage du conteneur 302, représentée sur la figure 10, dans laquelle il est immergé et une position escamotée au-dessus du niveau du bassin 300. Cet équipage mobile est déplaçable verticalement. Il comporte des moyens 307 de support d'un conteneur et une plaque horizontale 306 propre à former un couvercle d'obturation du conteneur 302 normalement ouvert à son extrémité supérieure. Ce couvercle 306 est traversé par une manche 308 d'immersion forcée de fruits à l'intérieur du conteneur 302. Cette manche est identique à celle représentée sur la figure 3. La manche 308 est alimentée depuis une pompe 310 dont l'entrée est piquée sur la cuve 300.

La cuve 300 présente une région de moindre épaisseur 320 destinée à la réception des fruits issus du convoyeur 12. La région 320 présente une cloison mobile d'obturation 322 disposée à son extrémité débouchant dans la partie principale de la cuve propre à recevoir un conteneur 302.

En outre, un trop-plein 324 formé d'un tube généralement vertical 326 traverse de part en part la cuve 300. Une extrémité supérieure 328 définit la hauteur de la surface du liquide contenu dans la cuve 300. L'extrémité inférieure 330 du tube débouche dans une cuve tampon 332 disposée au-dessous de la région 320 de la cuve. La base de la cuve tampon 332 est reliée à une pompe 334 dont la sortie est reliée à une extrémité de la région 320 de la cuve.

Dans ce mode de réalisation, les fruits sont acheminés depuis le transporteur 12 jusqu'à la région 320 de réception des fruits calibrés. Alors que l'équipage 304 est dans sa position de remplissage, les fruits sont acheminés jusqu'à l'extrémité d'entrée de la manche d'immersion forcée 308. Celle-ci achemine les fruits jusqu'au fond du conteneur 302. Sous l'effet de la poussée d'Archimède, les fruits remontent et viennent s'accumuler sur plusieurs couches à l'intérieur du conteneur 302 en étant retenu par la plaque 306 formant couvercle. Lorsque le conteneur est plein, celui-ci est sorti du bassin 300 simultanément à l'équipage mobile 304, de sorte que, lors du mouvement du conteneur, la plaque 306 soit maintenue sur l'extrémité ouverte du conteneur, évitant la fuite des fruits.

En outre, on conçoit que, lors de l'arrivée progressive des fruits dans la région de réception 320 et lors de leur accumulation dans le conteneur 302, le niveau d'eau dans la cuve 300 tend à augmenter. Ainsi, l'eau s'écoule par le trop-plein 324 et vient s'accumuler dans le réservoir tampon 332, évitant tout risque de débordement de la cuve 300.

Après extraction d'un conteneur plein 302, le niveau dans la cuve 300 est rétabli par la pompe 334 qui réintroduit dans le bassin 300 l'eau temporairement stockée dans le réservoir tampon 332.

## Revendications

1. Equipement d'immersion forcée d'un article comportant une manche (50 ; 108 ; 112 ; 204 ; 308) d'immersion forcée d'un article, laquelle manche (50 ; 108 ; 112 , 204 ; 308) d'immersion forcée d'un article comporte un corps délimitant un passage de circulation de l'article et au moins une entrée d'un liquide pour l'établissement d'un courant d'entraînement de l'article, l'équipement comportant en outre une pompe (64 ; 114 ; 218 ; 310) dont la sortie est reliée à la ou chaque entrée de liquide de la manche, **caractérisée en ce que** ledit passage délimité par le corps est généralement tubulaire et **en ce que** la manche comporte des moyens (58, 60) d'établissement dans ledit passage d'une veine liquide hélicoïdale circulant à la périphérie dudit passage.

2. Equipement selon la revendication 1, **caractérisé en ce que** lesdits moyens d'établissement de la veine liquide hélicoïdale comportent au moins une buse (58) d'injection formant l'entrée de liquide et débouchant sensiblement tangentiellement à l'intérieur du corps tubulaire, l'axe de la buse d'injection (58), à son extrémité débouchante, étant décalé angulairement par rapport au plan transversal audit passage pris à l'extrémité débouchante de la buse d'injection.

3. Equipement selon la revendication 2, **caractérisé en ce que** la manche comporte au moins deux buses régulièrement réparties suivant une circonférence dudit passage.

4. Equipement selon la revendication 2 ou 3, **caractérisé en ce que** ledit corps comporte une enveloppe extérieure (52) généralement tubulaire délimitant partiellement ledit passage, la ou chaque buse d'injection (58) débouchant au travers de ladite enveloppe (52), et **en ce que** lesdits moyens d'établissement de la veine liquide hélicoïdale comportent une jupe tubulaire (54) disposée à l'intérieur de l'enveloppe (52) en regard de la région où débouche la ou chaque buse d'injection (58), laquelle jupe (54) s'étend sur seulement une partie de la longueur de l'enveloppe (52) et délimite intérieurement un conduit de guidage des articles, ladite jupe délimitant extérieurement, avec ladite enveloppe, un espace annulaire (56) de circulation de la veine liquide hélicoïdale, lequel espace annulaire (56) débouche à une extrémité dans ledit passage.

5. Equipement selon la revendication 4, **caractérisé en ce que** la manche comporte un guide hélicoïdal (60) disposé dans ledit espace annulaire (56) entre l'enveloppe extérieure (52) et la jupe (54).

6. Equipement selon l'une quelconque des revendications précédentes, **caractérisé en ce que** la pompe a un débit compris entre 20 et 100 m³/h.

## Claims

1. Equipment for the forced immersion of an article made up of a sleeve (50; 108; 112; 204; 308) for forced immersion of an article, with the said sleeve (50; 108; 112; 204; 308) for forced immersion of an article being made up of a body demarcating a passage through which the article moves and at least one liquid inlet for establishing a current to carry the article, with the equipment being made up in addition of a pump (64; 114; 218; 310), the outlet of which is connected to the (or each) liquid inlet of the sleeve, **characterised by** the fact that the sleeve includes a means (58, 60) of establishing in the passage a helical flow which flows around the periphery of the aforementioned passage.

2. Equipment as described in claim 1, **characterised by** the fact that the aforementioned means of establishing the helical flow of liquid flow is made up of at least one injection nozzle (58) which forms the liquid inlet and which discharges effectively tangentially inside the tubular body, with the axis of the injection nozzle (58) at its discharge end being at an offset angle in relation to the transverse plane of the aforementioned passage taken at the discharge end of the injection nozzle.

3. Equipment as described in claim 2, **characterised by** the fact that the sleeve has at least two nozzles regularly spaced around a circumference of the aforementioned passage.

4. Equipment as described in claim 2 or 3 which is **characterised by** the fact that the aforementioned body has an external envelope (52) which is generally tubular and which partly demarcates the aforementioned passage, with the (or each) injection nozzle (58) discharging across the aforementioned envelope (52), and by the fact that the aforementioned means of establishing a helical liquid flow is made up of a tubular skirt (54) fitted inside the envelope (52) opposite the area where the (or each) injection nozzle (58) discharges, and this skirt (54) extends only partly over the length of the envelope (52) and internally demarcates a guide conduit for the articles, with the aforementioned skirt externally demarcating, with the aforementioned envelope, an annular space (56) for passage of the helical liquid flow, with this annular space (56) discharging at one end in the aforementioned passage.

5. Equipment as described in claim 4, **characterised by** the fact that the sleeve has a helical guide (60) fitted in the aforementioned annular space (56) between the external envelope (52) and the skirt (54).

6. Equipment as described in any of the preceding claims whatsoever, **characterised by** the fact that the pump has a flow between 20 and 100m³/h.

## Patentansprüche

1. Einrichtung zur zwangsweisen Immersion eines Gegenstandes, mit einem Rohr (50; 108; 112; 204; 308) zur zwangsweisen Immersion eines Gegenstandes, welches Rohr (50; 108; 112; 204; 308) zur zwangsweisen Immersion eines Gegenstandes einen Körper aufweist, welcher eine Passage zum Zirkulieren eines Gegenstands und mindestens einen Einlass für eine Flüssigkeit begrenzt zum Bewirken einer Strömung zum Mitnehmen des Gegenstandes, wobei die Einrichtung außerdem eine Pumpe (64; 114; 218; 310) aufweist, deren Auslass mit dem oder jedem Flüssigkeits-Einlass des Rohrs verbunden ist, **dadurch gekennzeichnet, dass** die Passage, welche von dem Körper begrenzt ist, im Wesentlichen rohrförmig ist, und dass das Rohr Mittel (58, 60) aufweist zum Bewirken eines schraubenlinienförmigen Flüssigkeitsstrahls in der Passage, welcher in der Peripherie jener Passage zirkuliert.

2. Einrichtung gemäß Anspruch 1, **dadurch gekennzeichnet, dass** die Mittel zum Bewirken des schraubenlinienförmigen Flüssigkeitsstrahls mindestens eine Injektions-Düse (58) aufweisen, welche den Flüssigkeitseinlass bildet und im Wesentlichen tangential in das Innere des rohrförmigen Körpers einmündet, wobei die Achse der Injektions-Düse (58) an ihrem Einmündungs-Ende relativ zur am Einmündungs-Ende der Injektions-Düse vorliegenden Querebene der Passage winkelverschoben ist.

3. Einrichtung gemäß Anspruch 2, **dadurch gekennzeichnet, dass** das Rohr mindestens zwei Düsen aufweist, welche entlang dem Umfang jener Passage regelmäßig verteilt sind.

4. Einrichtung gemäß Anspruch 2 oder 3, **dadurch gekennzeichnet, dass** der Körper einen im Wesentlichen rohrförmigen Außen-Mantel (52) aufweist, der teilweise jene Passage begrenzt, wobei die oder jede Injektions-Düse (58) durch jenen Mantel (52) hindurch mündet, und dass die Mittel zum Bewirken des schraubenlinienförmigen Flüssigkeitsstrahls eine rohrförmige Schürze (54) aufweisen, welche im Inneren des Mantels (52) angeordnet ist, und zwar dem Bereich zugewandt, wo die oder jede Injektions-Düse (58) einmündet, wobei die Schürze (54) sich nur über einen Teil der Länge des Mantels (52) erstreckt und innen einen Kanal zum Führen von Gegenständen begrenzt, wobei die Schürze außen mit jenem Mantel einen ringförmigen Zwischenraum (56) zum Zirkulieren des schraubenlinienförmigen Flüssigkeitsstrahls begrenzt, wobei der ringförmige Zwischenraum (56) an einem Ende in jene Passage einmündet.

5. Einrichtung gemäß Anspruch 4, **dadurch gekennzeichnet, dass** das Rohr eine schraunbenlinienförmige Führung (60) aufweist, welche in dem ringförmigen Zwischenraum (56) zwischen dem Außenmantel (52) und der Schürze (54) angeordnet ist.

6. Einrichtung gemäß einem der vorhergehenden Ansprüche, **dadurch gekennzeichnet, dass** die Pumpe eine Förderleistung zwischen 20 und 100 m³/h aufweist.
